# EUROPÄISCHE PATENTSCHRIFT

(11) **EP 2 281 739 B1**
(45) Veröffentlichungstag und Bekanntmachung des Hinweises auf die Patenterteilung: **02.01.2013**
(21) Anmeldenummer: 10171203.2
(22) Anmeldetag: 29.07.2010
(51) Int. Cl.: B62K 19/30

(54) **Fahrradrahmen mit einem Durchführungssystem für Übertragungselemente von Fahrradkomponenten**
Bicycle frame with implementation system for transfer elements of bicycle components
Cadre de bicyclette avec système d'exécution pour éléments de transmission de composants de vélo

(30) Priorität: 03.08.2009 DE 102009035942
(43) Veröffentlichungstag der Anmeldung: 09.02.2011
(73) Patentinhaber: Klieber, Jochen, 83342 Tacherting (DE)
(72) Erfinder: Klieber, Jochen, 83342 Tacherting (DE)
(74) Vertreter: Maiwald Patentanwalts GmbH

(56) Entgegenhaltungen:
- DE-A1- 19 535 508
- DE-C- 876 957
- DE-U1- 29 603 752
- GB-A- 606 917

## Beschreibung

### GEBIET DER ERFINDUNG

Die vorliegende Erfindung betrifft ein Durchführungssystem für Übertragungselemente von Fahrradkomponenten, sowie ein Fahrrad mit einem gefederten Fahrradrahmen und einem Durchführungssystem.

### HINTERGRUND DER ERFINDUNG

Es ist bekannt, beispielsweise Schalt- oder Bremszüge sowie Kabel zur Stromversorgung von Lampen entlang von Rahmenrohren von Fahrradrahmen zu führen. Diese Übertragungselemente, die meist einen geringen Umfang aufweisen - eine Bremsleitung hat gerade einmal einen Durchmesser von 5 mm - werden hierzu meist an der Unterseite oder Oberseite dieser Rahmenrohre in speziell ausgebildeten Haltern punktuell befestigt. Außerdem werden beispielsweise Leitungen zur Übertragung von elektrischer Energie innerhalb von Rahmenrohren geführt. Hierzu wird, zum Beispiel seitlich, in ein Rahmenrohr in der Nähe des Lenkkopfes ein Loch mit einem geringen Durchmesser gebohrt, durch das die Leitung eingefädelt wird. Diese Leitung wird dann an anderer Stelle wieder aus dem Rahmen durch ein ebenso kleines Bohrloch herausgefädelt, um dann mit dieser Leitung auf direktem Weg eine Verbindung zwischen Dynamo und Licht, zum Beispiel Rücklicht herzustellen. Es sind auch Fahrradrahmen bekannt, bei denen ebenfalls seitlich in der Nähe des Lenkkopfes in ein Oberrohr ein Schaltzug eintritt, der aus dem Oberrohr in der Nähe des Sitzrohres seitlich wieder austritt. Bei diesen Öffnungen handelt es sich um relativ kleine Öffnungen, durch die die Stabilität der Rohrkonstruktion, d.h. des Fahrradrahmens, nur vernachlässigbar beeinträchtigt wird.

Aus der DE 876 957 ist eine Kabelführung bei Fahrrädern bekannt, bei der in einem Gabelrohr bzw. einem Unterrohr eines Fahrradrahmens ein durchgehendes Führungsrohr für ein Leitungskabel bzw. einen Bowdenzug fest eingesetzt ist, um das Einziehen des Kabels bzw. des Bowdenzugs einfacher zu gestalten und um ein Eindringen von Feuchtigkeit und Schmutz in das Innere des Rahmenrohrs bzw. der Gabel zu vermeiden. Die Kabelführung an der Gabel weist auf der Oberseite des Schulterbereichs eine Öffnung des Führungsrohrs auf, das an einer Unterseite des Gabelrohrs wieder austritt. Die Bowdenzugführung bildet ein Führungsrohr, das am Unterrohr auf dessen Oberseite in das Rahmeninnere eintritt und am hinteren Ausfallende auf der Unterseite wieder austritt. Die DE 195 35 508 A1 betrifft eine Befestigungsvorrichtung für einen Fahrradscheinwerfer, der mit einer Schraube befestigt ist, welche die Fahrradgabe von vorne nach hinten unterhalb des unteren Lenkkopflagers durchdringt. Zur Kabelführung weist die Schraube eine in Längsrichtung verlaufende Durchgangsbohrung auf.

Es hat sich jedoch gezeigt, dass größer dimensionierte Leitungen, z.B. Übertragungselemente zur Betätigung von Sattelfeststellvorrichtungen und auch Hydraulikleitungen von Bremsen, seitlich an den Rahmenrohren vorbei geführt werden und dort zum Teil nur ungenügend geschützt sind.

### ZUSAMMENFASSUNG DER ERFINDUNG

Es besteht daher ein Bedürfnis, einen Durchführung für einen Fahrradrahmen zur Verfügung zu stellen, bei dem auch größer dimensionierte Übertragungselemente möglichst optimal geschützt gehalten werden.

Die Aufgabe wird gelöst durch den Gegenstand der jeweiligen unabhängigen Ansprüche. Weitere Ausführungsformen sind in den jeweiligen abhängigen Ansprüchen beschrieben.

Gemäß einem Ausführungsbeispiel der Erfindung ist ein Durchführungssystem für Übertragungselemente von Fahrradkomponenten vorgesehen, mit einem Fahrradrahmen mit einer Rohrkonstruktion aus Rahmenrohren, einer Übertragungselemente-Durchführung, und wenigstens einem Übertragungselement zur Steuerung einer Fahrradkomponente aus der Gruppe von Schaltzug, Bremszug, Hydraulikleitung oder Pneumatikleitung. Wenigstens ein Rahmenrohr weist in seiner Mantelfläche eine erste Öffnung und eine zweite Öffnung auf, wobei das wenigstens eine Rahmenrohr eine Rohrachse aufweist und die erste Öffnung bezüglich der Rohrachse der zweiten Öffnung im Wesentlichen gegenüberliegt. Die erste Öffnung weist einen ersten Randbereich und die zweite Öffnung einen zweiten Randbereich auf, wobei eine statisch wirksame Verstärkung des ersten und/oder zweiten Randbereichs vorgesehen ist. Zwischen der ersten und der zweiten Öffnung ist eine Durchführungsöffnung der Übertragungselemente-Durchführung ausgebildet, und das wenigstens eine Übertragungselement ist durch die Durchführungsöffnung hindurchführend angeordnet.

Durch das Einbringen von Verstärkungen in den Randbereichen der Öffnungen können erhöhte Krafteinwirkungen aufgenommen werden, die während des Betriebes eines Fahrrades entstehen. Durch diese Verstärkungen ist es somit möglich, auch größer dimensionierte Öffnungen in solchen Zonen der Rohrkonstruktion anzuordnen, die hohen Belastungen ausgesetzt sind. Wenn Öffnungen in solchen Belastungszonen ohne solche Verstärkungen angeordnet würden, könnte die durch die Belastung erzeugte Kraft zu einem Versagen des Rahmenrohres führen. Eine Verstärkung ist beispielsweise eine Materialanhäufung, wobei diese Verstärkung beispielsweise in Form eines Ringes, einer Scheibe oder einer Buchse ausgeführt sein kann. Die Verstärkung kann sowohl an der Außenwandung als auch an der Innenwandung der Mantelfläche des Rahmenrohres oder auch an beiden Wandungen angebracht sein. Die Verstärkung kann als separates Bauteil ausgeführt sein und dementsprechend mit dem Rahmenrohr, beispielsweise durch Schweißen, Löten oder Kleben, fest verbunden sein. Auch ist es möglich, die Verstärkung einstückig auszuführen. Insbesondere bei Metallwerkstoffen können diese Verstärkungen auch durch entsprechende Pressvorgänge erzeugt sein. Bei Fahrradrahmen, die aus kohlefaserverstärktem Kunststoff hergestellt sind, kann die Verstärkung in die entsprechenden Randbereiche der Öffnung beispielsweise einlaminiert oder auch auf diese Randbereiche auflaminiert sein oder bereits bei der Wicklung berücksichtigt sein.

Unter dem Ausdruck "im Wesentlichen" ist bei einer Betrachtung des Rohrquerschnitts der Winkel zwischen einer gedachten Verbindung der Rohrachse mit einem Mittelpunkt der ersten Öffnung und der gedachten Verbindung zwischen dem Mittelpunkt der ersten Öffnung und dem Mittelpunkt der zweiten Öffnung von etwa ± 15° zu verstehen.

Durch solche Öffnungen lassen sich auch größere Gegenstände durchführen. Beispielsweise lassen sich nunmehr hydraulisch betriebene Stößel, wie sie beispielsweise zur Sattelhöhenverstellung genutzt werden, durch solche Öffnungen durchführen. Zu einer Führung einer solchen Leitung durch ein Rahmenrohr musste bisher der Stößel von der Hydraulikleitung getrennt werden, um es anschließend nach der Montage wieder umständlich zu entlüften. Erfindungsgemäß lassen sich nunmehr Übertragungselemente in hochbelastete Zonen eines Rahmenrohres hineinführen oder aus diesen herausführen.

Gemäß einem weiteren Ausführungsbeispiel der Erfindung ist bei dem Durchführungssystem ein länglicher Hohlkörper mit einem ersten Ende mit einer ersten Stirnfläche und mit einem zweiten Ende mit einer zweiten Stirnfläche vorgesehen. Hierbei weisen die erste und die zweite Stirnfläche jeweils eine Öffnung auf. Der längliche Hohlkörper verbindet die erste Öffnung des Rahmenrohres und die zweite Öffnung des Rahmenrohres miteinander und bildet die Übertragungselemente-Durchführung.

Somit bildet der längliche Hohlkörper quasi einen Tunnel zwischen der ersten Öffnung und der zweiten Öffnung, so dass Übertragungselemente, wie beispielsweise Hydraulikleitungen für Scheiben- oder Felgenbremsen, Schalt- oder Bremszüge, sowie beispielsweise Stromkabel, problemlos durch das Rahmenrohr hindurchgeführt werden können. Somit bildet der längliche Hohlkörper eine Verbindung zwischen den verstärkten Randbereichen. Auch kann dieser längliche Hohlkörper zugleich auch als statisch wirksame Verstärkung derart ausgebildet sein, dass weitere Verstärkungen am Rahmenrohr entfallen können. Beispielsweise kann der Hohlkörper in den durch das Rahmenrohr gebildeten Innenraum eingesetzt werden, so dass die erste und die zweite Stirnfläche jeweils mit der Innenwandung des Rahmenrohres verbunden sind. In der Regel ist der längliche Hohlkörper bezüglich der ersten Öffnung und der zweiten Öffnung im Rahmenrohr so positioniert, dass Verengungen oder Vorsprünge vermieden werden. Hierdurch ist sichergestellt, dass die Übertragungselemente sich innerhalb der Durchführung nicht verhaken können.

Gemäß einem weiteren Ausführungsbeispiel der Erfindung verstärkt der längliche Hohlkörper den ersten und/oder den zweiten Randbereichs statisch wirksam.

Hierdurch kann der längliche Hohlkörper von außen durch zumindest eine der beiden Öffnungen in das Rahmenrohr eingesetzt sein. Es kann der längliche Hohlkörper mit einer Stirnfläche an der Innenwandung des Rahmenrohres anstehen, während die der ersten Stirnfläche gegenüberliegende zweite Stirnfläche bündig mit der Außenwandung des Rahmenrohres abschließt oder auch über dieses hinausragt. Natürlich kann diese Stirnfläche auch gegenüber der Außenwandung derart zurückstehen, dass das Ende des länglichen Hohlkörpers durch den Rand der Öffnung im Rahmenrohr gehalten wird.

Erfindungsgemäß sind die erste und die zweite Öffnung in zug- und druckbeanspruchten Zonen des wenigstens einen Rahmenrohres angeordnet, wobei gemäß einem weiteren Ausführungsbeispiel der Erfindung der längliche Hohlkörper stoffschlüssig mit dem Rahmenrohr verbunden ist.

Unter einer stoffschlüssigen Verbindung ist hier beispielsweise Schweißen, beispielsweise mit oder ohne Schweißlot, Hart- oder Weichlöten sowie Kleben oder Laminieren zu verstehen. Insbesondere bei kohlefaserverstärkten Fahrradrahmen ist unter Stoffschluss auch das einstückige und möglicherweise ansatzlose Herstellen eines solchen länglichen Hohlkörpers in einem Rahmenrohr zu verstehen. Durch diesen Stoffschluss kann zusätzlich eine Verstärkung der Randbereiche der ersten und der zweiten Öffnung erzeugt werden. Eine derart erzeugte Verstärkung kann einen Vorteil insbesondere dann bieten, wenn die erste und die zweite Öffnung in besonders zug- und druckbeanspruchten Zonen des Fahrradrahmens angebracht sind, wie beispielsweise dem Oberrohr und/oder dem Unterrohr.

Gemäß einem weiteren Ausführungsbeispiel der Erfindung ist der längliche Hohlkörper in die erste Öffnung und/oder die zweite Öffnung eingebracht.

Gemäß einem weiteren Ausführungsbeispiel der Erfindung weisen das erste und/oder das zweite Ende des länglichen Hohlkörpers mindestens teilweise einen seitlichen nach außen weisenden Vorsprung auf.

Dieser Vorsprung kann an das Ende des länglichen Hohlkörpers aus dem Werkstoff des Hohlkörpers angeformt sein, so dass der Hohlkörper einstückig ausgeführt ist. Der Vorsprung kann aber auch als separates Bauteil ausgeführt sein, das mit dem länglichen Hohlkörper beispielsweise durch Formschluss, Kraftschluss und/oder Stoffschluss fest verbunden ist. Der Vorsprung kann als Wulst, Abkantung, Bördelung, Aufweitung, angesetztes Schulterstück oder auch als ein Nippel ausgebildet sein. Ein solcher Nippel kann beispielsweise durch Quetschen eines Teilbereichs der Außenwandung des länglichen Hohlkörpers an einem Ende erfolgen. Der nach außen weisende Vorsprung kann hierbei zwei Aufgaben erfüllen. Zum einen kann der Vorsprung dazu dienen, dass der längliche Hohlkörper nur bis zu einem gewissen Maß durch die eine der beiden Öffnungen in das Rahmenrohr eingeführt werden kann, was die Herstellung vereinfacht. Zum anderen kann der Vorsprung auch derart ausgebildet sein, dass er die Funktionalität der Verstärkung übernimmt. Beispielsweise kann die der Stirnfläche des länglichen Hohlkörpers gegenüberliegende Fläche des Vorsprungs der Kontur der Außenwandung des Rahmenrohres angeglichen sein. Eine derartige Formgestaltung kann Vorteile beim Schweißen, Löten, Kleben oder auch Laminieren bieten.

Es soll an dieser Stelle erwähnt werden, dass die Innenwandung des länglichen Hohlkörpers auch aus mehrfach gekrümmten Flächen zusammengesetzt werden kann, so dass beispielsweise eine Trompetenform oder Trichterform entsteht, die im Querschnitt auch eckige und/oder runde Teilbereiche aufweisen kann.

Gemäß einem weiteren Ausführungsbeispiel der Erfindung ist der Vorsprung mit dem Rahmenrohr des Fahrradrahmens stoffschlüssig verbunden.

Durch die stoffschlüssige Verbindung des Vorsprungs mit dem Rahmenrohr wird der längliche Hohlkörper in dem Rahmenrohr unverrückbar festgehalten. Durch eine entsprechende Ausgestaltung des Vorsprungs können die Randbereiche der Öffnungen im Rahmenrohr derart verstärkt werden, dass ein zusätzliches Einbringen weiterer Verstärkungen entfällt.

Gemäß einem weiteren Ausführungsbeispiel der Erfindung ist der längliche Hohlkörper als einteiliger Rohrabschnitt ausgebildet.

Unter einem Rohrabschnitt ist hier zu verstehen, dass die Innenwandung des länglichen Hohlkörpers parallel verläuft. Besteht die Innenwandung des Rohrabschnitts aus mehreren Teilbereichen, so verlaufen die Teilbereiche zueinander parallel. Als Vertreter von derartigen Rohrabschnitten sollen an dieser Stelle beispielsweise Rohre mit quadratischem, rechteckigem, ovalem, elliptischem oder auch kreisförmigem Querschnitt genannt sein.

Gemäß einem weiteren Ausführungsbeispiel der Erfindung weist der längliche Hohlkörper mindestens ein erstes Teilstück und ein zweites Teilstück auf, wobei das erste Teilstück und das zweite Teilstück miteinander verbunden sind.

Unter dem Begriff des miteinander Verbindens des ersten Teilstücks und des zweiten Teilstücks ist nicht nur zu verstehen, dass das erste Teilstück mit dem zweiten Teilstück körperlich verbunden wird, sondern auch, dass das erste Teilstück mittels eines Zwischenstücks mit dem zweiten Teilstück verbunden wird. So kann beispielsweise das erste Teilstück durch die erste Öffnung des Rahmenrohres und das zweite Teilstück durch die zweite Öffnung des Rahmenrohres in ein sich im Rahmenrohrinneren befindendes Mittelstück eingeführt werden. So ist es beispielsweise möglich, die Innenwandung des ersten und/oder zweiten Teilstücks mindestens teilweise trichterförmig zu gestalten und diese mit einem röhrenförmigen Mittelstück zu verbinden. Natürlich können das erste Teilstück, das zweite Teilstück und das Mittelstück zumindest teilweise miteinander verklebt sein.

Gemäß einem weiteren Ausführungsbeispiel der Erfindung weisen das erste Teilstück des länglichen Hohlkörpers an einem der ersten Stirnfläche gegenüberliegenden ersten Rand und das zweite Teilstück des länglichen Hohlkörpers an einem der zweiten Stirnfläche gegenüberliegenden zweiten Rand jeweils zueinander passende Zentriermittel derart auf, dass eine Innenwandung des ersten Teilstücks mit einer Innenwandung des zweiten Teilstücks fluchtet.

Somit ist es möglich, das erste Teilstück durch die erste Öffnung des Rahmenrohres einzuführen und das zweite Teilstück durch die zweite Öffnung, ohne dass zusätzliche Justiermaßnahmen erforderlich sind. Die Zentriermittel können in Form eines Vorsprungs an dem der ersten Stirnfläche gegenüberliegenden Rand in Längserstreckungsrichtung in Verbindung mit einem entsprechenden Rücksprung an dem der zweiten Stirnfläche gegenüberliegenden Rand des zweiten Teilstücks in Längserstreckungsrichtung erfolgen. Auch können die Zentriermittel beispielsweise derart gebildet sein, dass der Rand des ersten Teilstücks in Längserstreckungsrichtung konusförmig geformt ist und sich in dem entsprechend geformten Rand des zweiten Teilstücks zentriert. Derartige Lösungen können den Vorteil bieten, dass bei einem Einführen der beiden Teilstücke durch die beiden Öffnungen der Rahmenrohre trotz Toleranzen der Abstände der beiden Öffnungen zueinander die beiden Teilstücke fluchtende Innenwände erzeugen. Fluchtende Innenwandungen können das Einführen von Übertragungselementen erleichtern. Um die Stabilität der beiden Teilstücke zu erhöhen, können diese auch untereinander im Bereich der Zentriermittel verklebt sein.

Gemäß einem weiteren Ausführungsbeispiel der Erfindung ist der längliche Hohlkörper mit dem Rahmenrohr schmutz- und feuchtigkeitsdicht verbunden.

Somit ist sichergestellt, dass zwischen der Außenwandung des länglichen Hohlkörpers und den Rändern und/oder Randbereichen der Öffnungen weder Schmutz noch Feuchtigkeit in das Rahmenrohrinnere eindringen kann. Während eingedrungener Schmutz in unerwünschter Weise das Gesamtgewicht des Fahrrads erhöht, kann in das Rahmenrohr eingedrungene Feuchtigkeit Korrosion erzeugen, die langfristig zu einer Schädigung des Fahrradrahmens führen kann.

Erfindungsgemäß ist das wenigstens eine Rahmenrohr, in dem die Übertragungselemente-Durchführung ausgebildet ist, ein Oberrohr, das an einem Ende mit einem Sitzrohr verbunden ist.

Gemäß einem weiteren Ausführungsbeispiel der Erfindung weisen das Sitzrohr einer Sitzrohrmittelachse und das Oberrohr eine Oberrohrmittelachse auf, die zusammen eine Rahmenebene aufspannen. Der längliche Hohlkörper weist eine Hohlkörpermittelachse auf, wobei die Hohlkörpermittelachse in der Rahmenebene liegt.

Gemäß einem weiteren Ausführungsbeispiel der Erfindung kann der längliche Hohlkörper in einem Oberrohr angeordnet sein, das einen Lenkkopf mit dem Sitzrohr verbindet. Beispielsweise kann der längliche Hohlkörper im Oberrohr derart positioniert werden, dass Übertragungselemente, wie beispielsweise Schaltzüge oder Hydraulikleitungen, die auf der Oberseite des Oberrohrs geführt sind, durch den länglichen Hohlkörper hindurch in Richtung eines Tretlagers entlang des Sitzrohres gebogen werden. Dies ermöglicht, die Außenhüllen der Brems- oder Schaltzüge in einem derart großen Bogen zu führen, dass die Reibung des Innenzugs an der Innenwandung der Außenhülle minimiert wird. Hierdurch kann die Schalt- oder Bremsperformance verbessert werden. In weiten Bögen verlegte Hydraulikleitungen weisen aufgrund geringerer äußerer Krafteinwirkung ebenfalls eine höhere Haltbarkeit auf.

Gemäß einem weiteren Ausführungsbeispiel der Erfindung ist das wenigstens eine Rahmenrohr ein Oberrohr, wobei der längliche Hohlkörper zur Rohrachse des Oberrohrs in einem Winkel zwischen 10° und 80° angeordnet ist.

Insbesondere eignet sich ein Winkels von 20° bis 40° besonders, um die hydraulische Leitung zur Betätigung der höhenverstellbaren Sattelstütze in einem großen Bogen ebendieser Sattelstütze zuzuführen, ohne dass die Hydraulikleitung die Beinbewegung des Fahrradfahrers beeinträchtigt oder dass die Hydraulikleitung mit anderen beweglichen mechanischen Bauteilen kollidiert.

Gemäß einem weiteren Ausführungsbeispiel der Erfindung weist der Fahrradrahmen ferner ein Tretlager auf und die zweite Öffnung ist näher an dem Tretlager angeordnet als die erste Öffnung, wobei die erste Öffnung näher an dem Sitzrohr angeordnet ist als die zweite Öffnung.

Durch eine derartige Positionierung des länglichen Hohlkörpers in der Nähe des Sitzrohres ist es beispielsweise möglich, die unterhalb eines Rahmenrohrs, das einen Lenkkopf mit dem Sitzrohr verbindet, Übertragungselemente zu führen und die Übertragungselemente mittels der erfindungsgemäßen Durchführung durch das Rahmenrohr hindurch einer mit dem Sitzrohr verbundenen Sattelstütze zuzuführen. Beispielsweise kann mit dieser Anordnung die Hydraulikleitung eines vom Lenker aus zu betätigenden Stößels, der an einer höhenverstellbaren Sattelstütze montiert ist, lageoptimiert, vor mechanischen Beeinträchtigungen, wie beispielsweise Scheuern, geschützt und durch die längliche Durchführung in einem weiten Bogen eben dieser Sattelstütze zugeführt werden. Darüber hinaus ist der längliche Hohlkörper derart dimensioniert, dass der zur Betätigung der höhenverstellbaren Sattelstütze benötigte hydraulische Stößel durch den länglichen Hohlkörper hindurchgeführt werden kann, ohne dass der Stößel von der Hydraulikleitung gelöst werden muss.

Gemäß einem weiteren Ausführungsbeispiel der Erfindung wird ein Fahrrad bereitgestellt, das einen gefederten Fahrradrahmen aufweist, mit einem Oberrohr, einem Sitzrohr, einem Tretlager und einem gefederten Hinterbau, der im Bereich des Tretlagers um einen unteren Drehpunkt schwenkbar gehalten ist und der im oberen Bereich mit einem gedämpften Hinterbausystem verbunden ist, das derart an dem Oberrohr und/oder dem Sitzrohr gehalten ist, dass eine Schwenkbewegung des Hinterbaus um den unteren Drehpunkt möglich ist. Dabei ist ein Durchführungssystem nach einem der vorhergehenden Ausführungsbeispiele vorgesehen, dessen Übertragungselemente-Durchführung im Oberrohr und/oder Sitzrohr angeordnet ist.

Gemäß einem weiteren Ausführungsbeispiel der Erfindung weist das gedämpfte Hinterbausystem eine Wippe auf, mittels der der Hinterbau an dem Oberrohr gehalten ist, wobei die Wippe zwei Umlenkhebel aufweist, die an dem Oberrohr jeweils seitlich um eine gemeinsame Drehachse schwenkbar gehalten sind. Die Übertragungselemente-Durchführung des Durchführungssystems ist im Oberrohr im Bereich zwischen den Umlenkhebeln angeordnet.

Gemäß einem weiteren Ausführungsbeispiel der Erfindung ist das Übertragungselement eine Hydraulikleitung einer Sattelarretierungsvorrichtung.

Als Werkstoffe für den Fahrradrahmen kommen Metalle, wie beispielsweise Aluminium, Titan und Stahl, sowie dessen Legierungen und Kunststoffe, insbesondere faserverstärkte, in Betracht.

Der längliche Hohlkörper, die beiden Teilstücke sowie das Mittelstück können aus Metall, wie beispielsweise Aluminium, Titan und Stahl, oder dessen Legierungen und/oder Kunststoffe, insbesondere faserverstärkte, gefertigt sein. Weiterhin können diese Teile spanend oder spanlos gefertigt sein. Unter dem Begriff "spanend" ist beispielsweise Fräsen oder Drehen zu verstehen. Unter dem Begriff "spanlos" ist beispielsweise Umformen, Urformen, Spritzen oder Gießen zu verstehen.

Diese und andere Aspekte der vorliegenden Erfindung werden durch die Bezugnahme auf die hiernach beschriebenen beispielhaften Ausführungsformen erläutert und verdeutlicht. Es sei darauf hingewiesen, dass die oberhalb, und auch im folgenden mit Bezug auf die Figuren beschriebenen einzelnen Merkmale und Aspekte können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Beispielhafte Ausführungsformen werden im Folgenden mit Bezugnahme auf die folgenden Zeichnungen beschrieben. Es zeigen:
- Figur 1: ein Fahrrad mit einem erfindungsgemäßen Durchführungssystem für Übertragungselemente von Fahrradkomponenten;
- Figur 2: eine Ausführungsform eines erfindungsgemäßen Durchführungssystems mit einer Übertragungselemente- Durchführung;
- Figur 3: eine weitere Ausführung einer erfindungsgemäßen Übertragungselemente-Durchführung;
- Figur 4: eine weitere Ausführung einer erfindungsgemäßen Übertragungselemente-Durchführung;
- Figur 5: eine weitere Ausführung einer erfindungsgemäßen Übertragungselemente-Durchführung;
- Figur 6: eine weitere Ausführung einer erfindungsgemäßen Übertragungselemente-Durchführung;
- Figur 7: eine weitere Ausführung einer erfindungsgemäßen Übertragungselemente-Durchführung; und
- Figur 8: eine weitere Ausführung einer erfindungsgemäßen Übertragungselemente-Durchführung;

### DETAILLIERTE BESCHREIBUNG BEISPIELHAFTER AUSFÜHRUNGEN

Vorausschickend soll erwähnt werden, dass gleiche Teile in den Figuren gleiche Bezugszeichen aufweisen und dass die Zeichnungen lediglich schematisch und nicht notwendigerweise maßstabsgetreu sind.

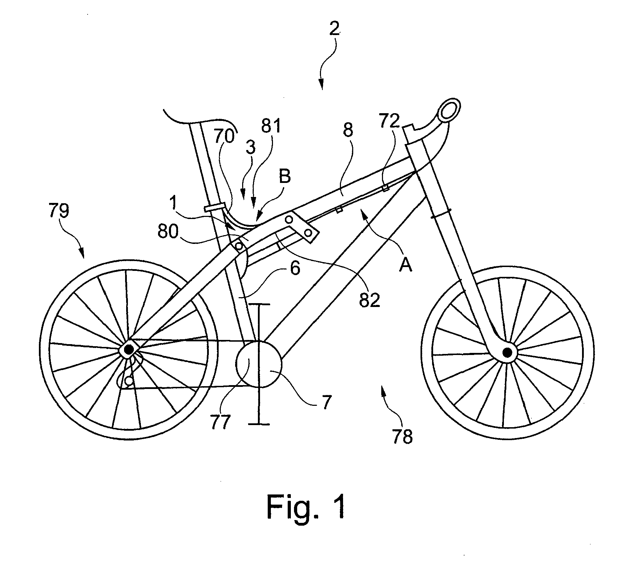

Figur 1 zeigt ein Fahrrad 78 mit einem gefederten Fahrradrahmen 2, der ein Oberrohr 8, ein Sitzrohr 6, ein Tretlager 7 und einen gefederten Hinterbau 79 aufweist, welcher im Bereich des Tretlagers um einen unteren Drehpunkt 77 schwenkbar gehalten ist und welcher im oberen Bereich mit einer gedämpften Wippe 80 eines Hinterbausystems 81 verbunden ist. Die Wippe ist derart an dem Oberrohr gehalten, dass eine Schwenkbewegung des Hinterbaus um den unteren Drehpunkt möglich ist. Die Wippe weist zwei Umlenkhebel 82 auf, die an dem Oberrohr jeweils seitlich um eine gemeinsame Drehachse schwenkbar gehalten sind, wobei in Fig. 1 nur der eine seitliche Umlenkhebel zu sehen ist; der andere wird davon verdeckt. Außerdem ist ein Durchführungssystem 1 für Übertragungselemente von Fahrradkomponenten vorgesehen, das den Fahrradrahmen 2 mit einer Rohrkonstruktion aus Rahmenrohren, eine Übertragungselemente-Durchführung 3 und wenigstens ein Übertragungselement zur Steuerung einer Fahrradkomponente aus der Gruppe von Schaltzug, Bremszug, Hydraulikleitung oder Pneumatikleitung aufweist. Die Übertragungselemente-Durchführung kann zum Beispiel im Oberrohr im Bereich zwischen den Umlenkhebeln 82 angeordnet sein.

Wie in Fig. 1 beispielhaft gezeigt, ist als Übertragungselemente eine Hydraulikleitung 70 vom Lenker zu einer Sattelstütze geführt, die beispielsweise einen hydraulisch betätigbaren Verstellmechanismus aufweist. Die Hydraulikleitung 70 ist zwischen der Wippe 80 hindurchgeführt. Die Durchführung der Hydraulikleitung durch einen beispielsweise im Oberrohr 8 angeordneten länglichen Hohlkörper 24 ist in Fig. 1 von der Wippe verdeckt (siehe unten).

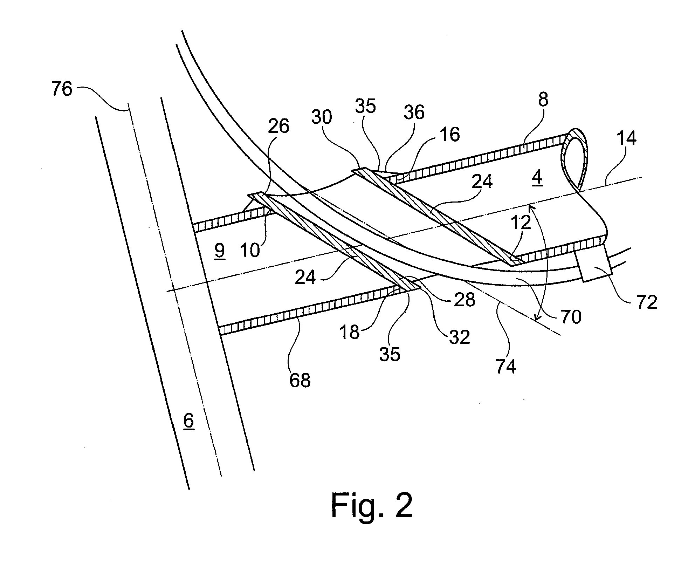

Um das Übertragungselement, z.B. die Hydraulikleitung 70, möglichst geschützt zu führen, verläuft es in einem ersten Bereich A unterhalb des Oberrohrs. In einem zweiten Bereich B verläuft das Übertragungselement oberhalb des Oberrohrs, um mit der Fahrradkomponente, in dem Beispiel in Fig. 2 eine verstellbare Sattelstützenarretierung (nicht näher dargestellt), verbunden zu werden.

Die Begriffe "oberhalb" und "unterhalb" beziehen sich auf die normale aufrechte Anordnung des Rahmens, die auch während des Fahrens vorliegt.

Um von der einen Seite auf die andere Seite des Oberrohrs zu gelangen, weist die Übertragungselemente-Durchführung eine Durchführungsöffnung 5 auf, durch die das wenigstens eine Übertragungselement hindurchführend angeordnet ist (nicht gezeigt; siehe Fig. 2 ff.).

Das Durchführungssystem 1 wird im Folgenden anhand verschiedener beispielhafter Ausführungen erläutert.

In Fig. 2 ist der Fahrradrahmen 2 des Durchführungssystems 1 in einem Ausschnitt gezeigt. Das in Fig. 1 gezeigte Hinterbausystem, insbesondere die zweiteilige Wippe und deren Befestigung am Oberrohr sind in den folgenden Figuren der Übersichtlichkeit halber nicht dargestellt.

Der Fahrradrahmen 2 besteht aus einer Rohrkonstruktion aus Rahmenrohren. Hier dargestellt ist das Oberrohr 4, das fest mit einem Sitzrohr 6 verbunden ist. Das Oberrohr 4 wird im Wesentlichen durch eine Mantelfläche 8 gebildet. Das Rahmenrohr 4 weist in seiner Mantelfläche 8 eine erste Öffnung 10 und eine zweite Öffnung 12 auf; wobei das wenigstens eine Rahmenrohr 4 eine Rohrachse 14 aufweist und die erste Öffnung 10 bezüglich der Rohrachse 14 der zweiten Öffnung 12 im Wesentlichen gegenüberliegt. Die erste Öffnung 10 weist einen ersten Randbereich 16 und die zweite Öffnung 12 einen zweiten Randbereich 18 auf; wobei eine statisch wirksame Verstärkung des ersten 16 und/oder zweiten Randbereichs 18 vorgesehen ist.

Die Durchführungsöffnung der Übertragungselemente-Durchführung ist zwischen der ersten und der zweiten Öffnung ausgebildet ist. Die Hydraulikleitung 70, als Beispiel für ein Übertragungselement, ist durch die Durchführungsöffnung hindurchführend angeordnet.

In Figur 2 verbindet ein länglicher Hohlkörper 24 die erste Öffnung 10 und die zweite Öffnung 12 miteinander. Der längliche Hohlkörper besitzt an einem ersten Ende 26 eine erste Stirnfläche 30 sowie an seinem zweiten Ende 28 eine zweite Stirnfläche 32. Zusätzlich weisen sowohl die erste 30 als auch die zweite Stirnfläche 32 jeweils eine Öffnung 34 auf. Der längliche Hohlkörper (24) verbindet die erste Öffnung (10) und die zweite Öffnung (12) miteinander und bildet die Übertragungselemente-Durchführung.

In dem in Figur 2 dargestellten Ausführungsbeispiel schließt die zweite Stirnfläche 32 des länglichen Hohlkörpers 24 bündig mit einer Unterseite 68 des Rahmenrohres 8 ab. Der längliche Hohlkörper ist im Bereich der zweiten Stirnfläche 32 sowie mit dem ersten Ende 26 mit der Mantelfläche 8 in den beiden Randbereichen 16, 18 mit dem Rahmenrohr 4 verschweißt. Hierzu ist die Schweißnaht 35 umlaufend gesetzt. Weiterhin ist die Hydraulikleitung 70 erkennbar, die an der Unterseite 68 des Oberrohres 8 verläuft und dort mittels eines Befestigungsmittels 72 fixiert ist. Weiterhin verläuft die Hydraulikleitung 70 in einem großen Bogen durch den länglichen Hohlkörper 24 hindurch zu dem Sitzrohr 6. Der Hohlkörper hat eine Hohlkörpermittelachse 74, der sich entlang des länglichen Hohlkörpers 24 erstreckt. Die Rohrachse 14 und die Hohlkörpermittelachse 74 bilden einen Winkel α von 10° bis 80°. Der Winkel α ist hier so gewählt, dass der große Verlegebogen der Hydraulikleitung 70 nicht behindert ist. In der hier vorliegenden beispielhaften Ausführungsform beträgt der Winkel α ca. 20° bis 40°. Weiterhin ist in diesem Ausführungsbeispiel ersichtlich, dass die erste Öffnung 10 näher an dem Sitzrohr 6 angeordnet ist als die Öffnung 12. Weiterhin besitzt das Sitzrohr 6 eine Sitzrohrmittelachse 76, die zusammen mit der Hohlkörpermittelachse 74 eine Ebene aufspannt, so dass hierdurch die Lage des länglichen Hohlkörpers 24 zu dem Sitzrohr 6 bestimmt ist.

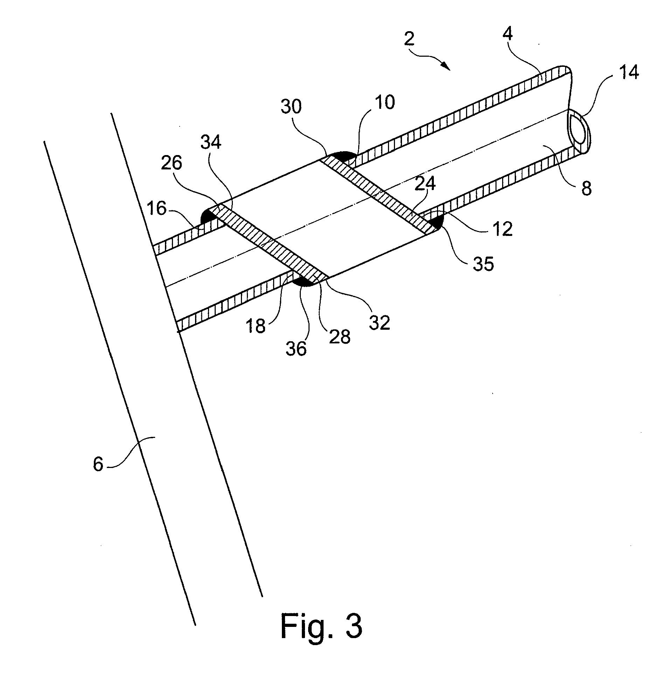

Figur 3 zeigt einen Ausschnitt des Fahrradrahmens 2 mit einer weiteren Ausführung des länglichen Hohlkörpers 24. In dem hier gezeigten Ausführungsbeispiel ist die Längserstreckung des länglichen Hohlkörpers 24 größer als die Höhe des Oberrohrs 4, so dass zumindest ein Teil der beiden Enden 26, 28 des länglichen Hohlkörpers 24 über das Mantelrohr 8 hinausstehen. Natürlich wäre es auch möglich, nur eines der Enden 26, 28 über das Mantelrohr 8 hinausstehen zu lassen (siehe hierzu auch Figur 1). Der längliche Hohlkörper 24 ist derart in den beiden Öffnungen 10, 12 positioniert, dass er mit seinen beiden Enden 26, 28 gleichmäßig über die Mantelfläche 8 vorsteht. Weiterhin sind die beiden Enden 26, 28 mit der Mantelfläche 4 verschweißt. Die Schweißnaht 35 bildet in Verbindung mit dem ersten Randbereich 16 der ersten Öffnung 10 sowie dem zweiten Randbereich 18 der zweiten Öffnung 12 eine dritte Ausführung einer Verstärkung 36. Weiterhin ist der längliche Hohlkörper 24 in diesem Ausführungsbeispiel als ein Rohrabschnitt ausgebildet. Durch die die beiden Enden 26, 28 mit den beiden Randbereichen 16, 18 umlaufend verbindenden Schweißnaht 35 ist der längliche Hohlkörper 24 mit dem Rahmenrohr 4 nicht nur staub- und feuchtigkeitsdicht verbunden, sondern ist auch derart stabil ausgebildet, dass die während des Betriebs in den beiden Randbereichen 16, 18 auftretenden Zug- und Druckbelastungen Belastungen durch den länglichen Hohlkörper aufgenommen werden können.

Es sei darauf hingewiesen, dass das Übertragungselement des erfindungsgemäßen Durchführungssystems in Figur 3 nicht gezeigt ist, ebenso wie in den folgenden Figuren.

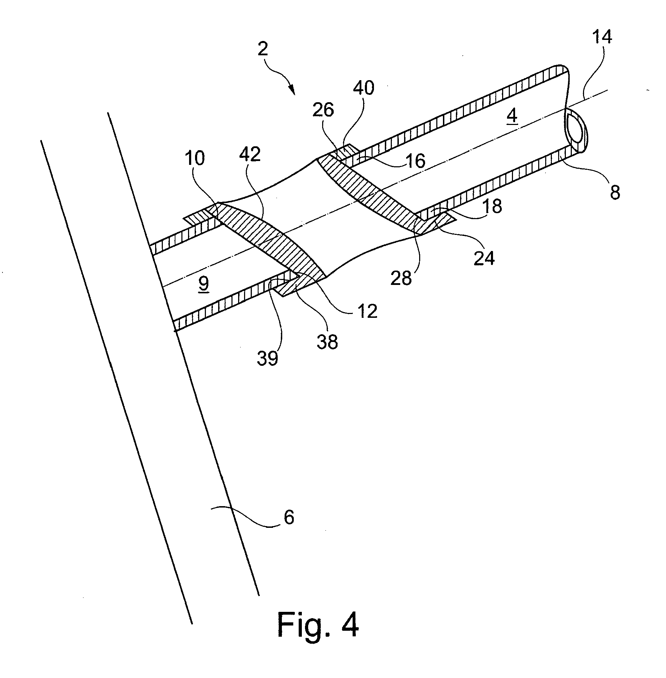

Figur 4 zeigt einen Ausschnitt aus einem Fahrradrahmen 2 mit einer weiteren Ausführung des länglichen Hohlkörpers 24. In dem hier gezeigten

Ausführungsbeispiel ist an dem zweiten Ende 28 des länglichen Hohlkörpers 24 ein seitlich nach außen weisender Vorsprung 38 angeformt. Dieser Vorsprung 38 dient zum einen als Anschlag beim Einschieben des länglichen Hohlkörpers 24 in das Oberrohr 4 sowie andererseits als eine weitere Ausführung einer Verstärkung des zweiten Randbereichs 18. Die dem Mantelrohr 8 zugewandte Fläche 39 des ersten Vorsprungs 38 ist im zweiten Randbereich 18 der Außenkontur der Mantelfläche 8 angepasst. Somit entstehen zwischen der Mantelfläche und dem ersten Vorsprung 38 keine unnötigen Fugen, in die Feuchtigkeit oder Schmutz gelangen könnte. Zusätzlich lassen sich solche passgenauen Flächen besser miteinander stoffschlüssig verbinden. Nach dem Einsetzen des länglichen Hohlkörpers 24 durch die beiden Öffnungen 10, 12 wird das erste Ende 26 durch einen zweiten Vorsprung 40 gesichert. Somit kann der längliche Hohlkörper 24 nicht mehr aus dem Oberrohr 4 rutschen. Der zweite Vorsprung 40 ist als eine gekrümmte Scheibe ausgebildet, die mit dem ersten Ende 26 des länglichen Hohlkörpers 24 sowie dem ersten Randbereich 16 der Mantelfläche 8 stoffschlüssig verbunden ist. Weiterhin ist die Innenwandung 42 des länglichen Hohlkörpers 24 in dem hier vorliegenden Beispiel trompetenförmig ausgebildet.

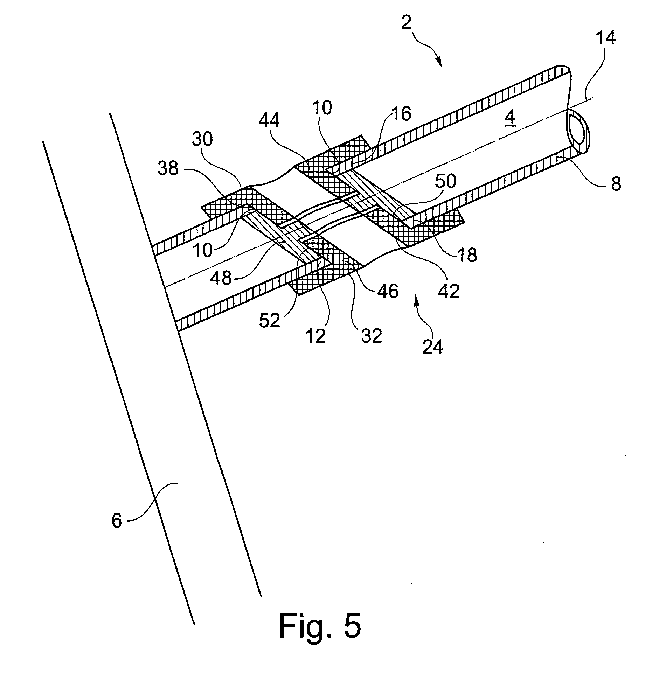

Figur 5 zeigt einen Ausschnitt aus einem Fahrradrahmen 2 mit einer weiteren Ausführung des länglichen Hohlkörpers 24, der durch ein erstes Teilstück 44, ein zweites Teilstück 46 und ein Mittelstück 48 gebildet ist. Hierbei sind das erste Teilstück 44, das zweite Teilstück 46 und das Mittelstück 48 miteinander verbunden. Bei beiden Teilstücken 44, 46 ist der Vorsprung 38 an dem Ende 26, 28 des jeweilige Teilstück 44, 46 angeformt. Das erste Teilstück 44 wird durch die erste Öffnung 10 und das zweite Teilstück 46 durch die zweite Öffnung 12 so weit in das Oberrohr 4 eingeführt, bis die beiden Vorsprünge 38 ein weiteres Einbringen verhindern. In dieser Stellung verbindet das Mittelstück 48 die beiden Teilstücke 44 und 46 derart, dass eine Innenwand 50 des Mittelstücks 48 die jeweilige Außenwandung 52 der beiden Teilstücke 44, 46 zumindest teilweise umfasst. Natürlich kann das Mittelstück 48 mit den beiden Teilstücken 44, 46 stoffschlüssig verbunden sein. Das Mittelstück ist derart geformt, dass es eine zueinander fluchtende Innenwandung 42 der beiden Teilstücke 44, 46 erzeugt.

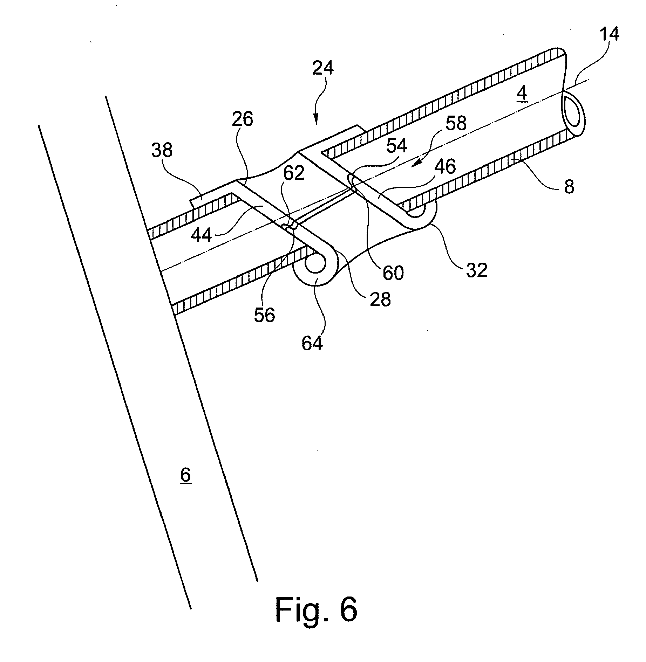

Figur 6 zeigt einen Ausschnitt aus einem Fahrradrahmen 2 mit einer weiteren Ausführung des länglichen Hohlkörpers 24. Hierbei besteht der längliche Hohlkörper aus einem ersten Teilstück 44 und einem zweiten Teilstück 46. Das erste Teilstück 44 besitzt einen der ersten Stirnfläche 30 gegenüberliegenden ersten Rand 54. Das zweite Teilstück 46 besitzt einen der zweiten Stirnfläche 32 gegenüberliegenden zweiten Rand 56. An dem ersten Ende 26 des ersten Teilstücks 44 ist ein Vorsprung 38 ausgeformt, der einer gebogenen Scheibe ähnelt. Auch das zweite Teilstück 46 weist an seinem zweiten Ende 28 einen Vorsprung 64 auf, der in dieser beispielhaften Ausführungsform einer Bördelung ähnelt. Ein derartig gestalteter Vorsprung 64 bietet den Vorteil, dass an der Öffnung 34 der zweiten Stirnfläche 32 des zweiten Teilstücks 46 durch die trompetenförmige Ausformung keine vorspringenden Kanten oder Grate vorhanden sind. Somit werden Gegenstände, die in das zweite Teilstück 46 eingeführt werden, trichterförmig zu der Innenwandung 42 gelenkt. Das erste Teilstück 44 ist mit dem zweiten Teilstück 46 mittels Zentriermitteln 58 derart zueinander ausgerichtet, dass die Innenwandungen 42 der beiden Teilstücke 44, 46 zueinander fluchten. In dem vorliegenden Ausführungsbeispiel ist hierzu an dem ersten Rand 54 ein Vorsprung 62 angeordnet, der in einem an dem zweiten Rand 56 des zweiten Teilstücks 46 angeordneten Rücksprung 60 eingreift. Neben der stoffschlüssigen Verbindung der beiden Vorsprünge 38, 64 mit dem Mantelrohr 8 können auch die die Zentriermittel 58 untereinander stoffschlüssig miteinander verbunden sein.

Der längliche Hohlkörper 24 sowie die ihn bildenden Teilstücke 44, 46 sowie das Mittelstück 48 können aus Metall und dessen Legierungen sowie Kunststoffen, die auch faserverstärkt sein können, hergestellt sein. Die Teile können mechanisch gefertigt, gegossen oder gespritzt sein. Weiterhin kann der Fahrradrahmen 2 aus Metall, wie beispielsweise Titan, Aluminium oder Stahl, sowie dessen Legierungen oder aus faserverstärktem, insbesondere kohlefaserverstärktem Kunststoff hergestellt sein.

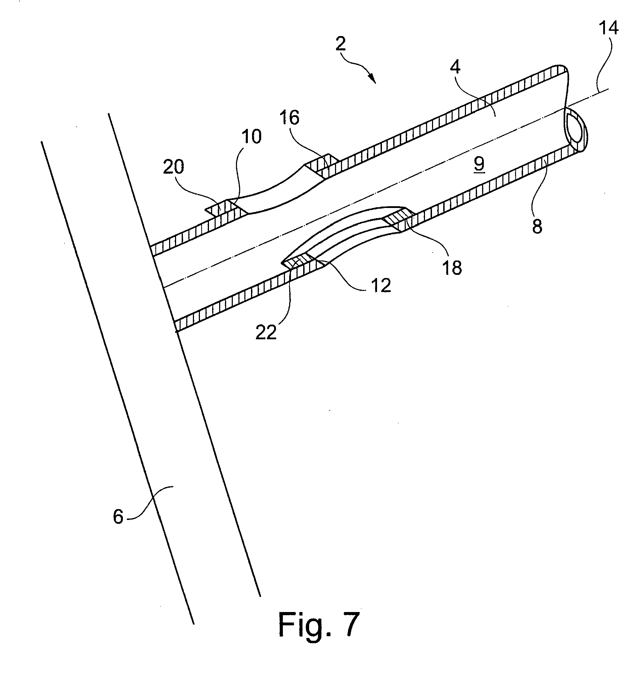

In der in Fig. 7 vorliegenden beispielhaften Ausführungsform ist die Verstärkung 20 einstückig mit der Mantelfläche 8 des Oberrohres 4 ausgeführt. Bei dieser Verstärkung 20 handelt es sich um eine Materialanhäufung, die über die Mantelfläche 8 übersteht. Der die zweite Öffnung 12 umgebende zweite Randbereich 18 ist mittels einer zweiten Ausführung der Verstärkung 22 statisch wirksam verstärkt. In dem hier vorliegenden Fall ist die zweite Ausführung der Verstärkung 22 als eine gekrümmte Scheibe ausgeführt, die mit einer Innenwandung 9 des Mantelrohres 8 vollflächig verklebt ist. In dem hier vorliegenden Beispiel beträgt die Länge der ersten Öffnung 10, gemessen entlang der Rohrachse 14, etwa 15 mm. Die Breite der ersten Öffnung 10, gemessen quer zu der Rohrachse 14, beträgt etwa 10 mm. Das nicht dargestellte Übertragungselement verläuft durch die beiden Öffnungen hindurch von rechts unten schräg nach links oben.

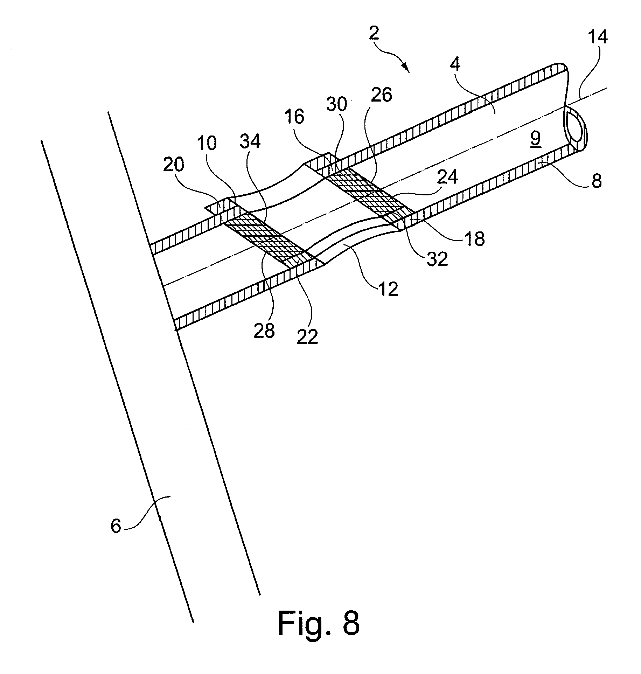

Figur 8 zeigt den bereits in Figur 7 beschriebenen Ausschnitt aus dem Fahrradrahmen 2, bei dem der längliche Hohlkörper 24 die erste Öffnung 10 und die zweite Öffnung 12 miteinander verbindet. In dem hier vorliegenden Beispiel ist der Querschnitt der Öffnung 34 deckungsgleich mit dem Querschnitt der ersten Öffnung 10 sowie dem Querschnitt der zweiten Öffnung 12. Weiterhin ist der Figur 8 zu entnehmen, dass der längliche Hohlkörper 24 mit der ersten Stirnfläche 30 im ersten Randbereich 16 der ersten Öffnung 10 an die Innenwandung 9 der Mantelfläche 8 grenzt. Weiterhin grenzt die zweite Stirnfläche 32 des länglichen Hohlkörpers 24 an die Verstärkung 22. Damit der längliche Hohlkörper 24 sich nicht innerhalb des Oberrohres 8 entlang der Rohrachse 14 verschieben kann, sind die beiden Stirnflächen 30, 32 mit der Innenwandung 9 der Mantelfläche 8 bzw. der Verstärkung 22 stoffschlüssig verbunden, in dem hier vorliegenden Beispiel verklebt.

Durch die Verstärkungen 20, 22, 36, 38 lassen sich die beiden Randbereiche 16, 18 der Öffnungen 10, 12 in zug- und druckbeanspruchten Rahmenrohren derart verstärken, dass solche Öffnungen 10, 12 unabhängig von ihrer Größe in solchen zug- und druckbeanspruchten Zonen eines Rahmenrohres 8 angeordnet werden können. Weiterhin können die Öffnungen 10, 12 durch den länglichen Hohlkörper 24 derart miteinander verbunden werden, dass ein Tunnel zwischen diesen Öffnungen 10, 12 gebildet ist, durch den Übertragungselemente wie beispielsweise Schalt- und Bremszüge, Hydraulik- oder Pneumatikleitungen sowie Elektrokabel durch das Rahmenrohr durchgeführt werden können. Durch die Lage des länglichen Hohlkörpers können die Übertragungselemente in einem weiten Bogen verlegt werden, so dass diese nicht durch zusätzliche Kräfte, die durch enge Bögen verursacht werden, zusätzlich belastet sind. Weiterhin ist es möglich, die Enden 26, 28 des länglichen Hohlkörpers 24 beispielsweise mittels den Vorsprüngen 38, 40 oder der Schweißnaht 35 mit dem Rahmenrohr 8 stoffschlüssig derart zu verbinden, das die in den Randbereichen 16, 18 auftretenden Belastungen in den länglichen Hohlkörper eingeleitet werden, ohne den Fahrradrahmen zu schädigen.

### BEZUGSZEICHENLISTE

- 1: Duchführungssystem
- 2: Fahrradrahmen
- 4: Oberrohr
- 5: Drehpunkt
- 6: Sitzrohr
- 7: Tretlager
- 8: Mantelfläche
- 9: Innenwandung der Mantelfläche
- 10: erste Öffnung
- 12: zweite Öffnung
- 14: Rohrachse
- 16: erster Randbereich
- 18: zweiter Randbereich
- 20: erste Ausführung der Verstärkung
- 22: zweite Ausführung der Verstärkung
- 24: länglicher Hohlkörper
- 26: erstes Ende des länglichen Hohlkörpers
- 28: zweites Ende des länglichen Hohlkörpers
- 30: erste Stirnfläche des länglichen Hohlkörpers
- 32: zweite Stirnfläche des länglichen Hohlkörpers
- 34: Öffnung in der Stirnfläche
- 35: Schweißnaht
- 36: dritte Ausführung der Verstärkung
- 38: vierte Ausführung der Verstärkung
- 39: Fläche der Verstärkung
- 40: fünfte Ausführung der Verstärkung
- 42: Innenwandung des länglichen Hohlkörpers
- 44: erstes Teilstück
- 46: zweites Teilstück
- 48: Mittelstück
- 50: Innenwand
- 52: Außenwand
- 54: erster Rand
- 56: zweiter Rand
- 58: Zentriermittel
- 60: Rücksprung
- 62: Vorsprung
- 64: sechste Ausführung der Verstärkung
- 68: Unterseite
- 70: Hydraulikleitung
- 72: Befestigungsmittel
- 74: Hohlkörpermittelachse
- 76: Sitzrohrmittelachse
- 78: Fahrrad
- 79: Hinterbau
- 80: Wippe
- 81: Hinterbausystem
- 82: Umlenkhebel
- A: Bereich unterhalb des Oberrohrs
- B: Bereich oberhalb des Oberrohrs
- α: Winkel

## Patentansprüche

1. Fahrradrahmen mit einem Durchführungssystem (1) für Übertragungselemente von Fahrradkomponenten:
wobei der Fahrradrahmen (2) eine Rohrkonstruktion aus Rahmenrohren (4, 6) aufweist; und
wobei vorgesehen sind
- eine Übertragungselemente-Durchführung (3); und
- wenigstens ein Übertragungselement (70) zur Steuerung einer Fahrradkomponente aus der Gruppe von Schaltzug, Bremszug, Hydraulikleitung oder Pneumatikleitung;
wobei wenigstens ein Rahmenrohr (4) in seiner Mantelfläche (8) eine erste Öffnung (10) und eine zweite Öffnung (12) aufweist; wobei das wenigstens eine Rahmenrohr (4) eine Rohrachse (14) aufweist und die erste Öffnung (10) bezüglich der Rohrachse (14) der zweiten Öffnung (12) im Wesentlichen gegenüberliegt; und wobei die erste Öffnung (10) einen ersten Randbereich (16) und die zweite Öffnung (12) einen zweiten Randbereich (18) aufweist;
wobei eine statisch wirksame Verstärkung (20, 22, 36, 38, 40) des ersten (16) und/oder zweiten Randbereichs (18) vorgesehen ist;
wobei zwischen der ersten und der zweiten Öffnung eine Durchführungsöffnung (5) der Übertragungselemente-Durchführung ausgebildet ist; und
wobei das wenigstens eine Übertragungselement (70) durch die Durchführungsöffnung (5) hindurchführend angeordnet ist;
wobei dem die erste (10) und die zweite Öffnung (12) in zug- und druckbeanspruchten Zonen des wenigstens einen Rahmenrohres (4) angeordnet sind; und
wobei das wenigstens eine Rahmenrohr, in dem die Übertragungselemente-Durchführung ausgebildet ist, ein Oberrohr (4) ist, das an einem Ende mit einem Sitzrohr (6) verbunden ist.

2. Fahrradrahmen nach Anspruch 1, bei dem ein länglicher Hohlkörper (24) mit einem ersten Ende (26) mit einer ersten Stirnfläche (30) und mit einem zweiten Ende (28) mit einer zweiten Stirnfläche (32) vorgesehen ist;
wobei die erste (30) und die zweite Stirnfläche (32) jeweils eine Öffnung (34) aufweisen; und
wobei der längliche Hohlkörper (24) die erste Öffnung (10) und die zweite Öffnung (12) miteinander verbindet und die Übertragungselemente-Durchführung bildet.

3. Fahrradrahmen nach Anspruch 2, bei dem der längliche Hohlkörper (24) den ersten (16) und/oder den zweiten Randbereichs (18) statisch wirksam verstärkt.

4. Fahrradrahmen nach Anspruch 2 oder 3, bei dem der längliche Hohlkörper (24) stoffschlüssig mit dem Rahmenrohr (4) verbunden ist.

5. Fahrradrahmen nach einem der Ansprüche 2 bis 4, bei dem der längliche Hohlkörper (24) in die erste Öffnung (10) und/oder die zweite Öffnung (12) eingebracht ist.

6. Fahrradrahmen nach einem der Ansprüche 2 bis 5, wobei das erste (26) und/oder das zweite Ende (28) des länglichen Hohlkörpers (24) mindestens teilweise einen seitlichen nach außen weisenden Vorsprung (38, 40) aufweisen.

7. Fahrradrahmen nach einem der Ansprüche 2 bis 6, bei dem der längliche Hohlkörper (24) mindestens ein erstes Teilstück (44) und ein zweites Teilstück (46) aufweist;
wobei das erste Teilstück (44) und das zweite Teilstück (46) miteinander verbunden sind.

8. Fahrradrahmen nach Anspruch 7, wobei das erste Teilstück (44) an einem der ersten Stirnfläche (30) gegenüberliegenden ersten Rand (54) und das zweite Teilstück (46) an einem der zweiten Stirnfläche (32) gegenüberliegenden zweiten Rand (56) jeweils zueinander passende Zentriermittel (58) derart aufweisen, dass eine Innenwandung (42) des ersten Teilstücks (44) mit einer Innenwandung (42) des zweiten Teilstücks (46) fluchtet.

9. Fahrradrahmen nach einem der Ansprüche 2 bis 8, bei dem das Sitzrohr (6) einer Sitzrohrmittelachse (76) und das Oberrohr eine Oberrohrmittelachse aufweisen, die zusammen eine Rahmenebene aufspannen;
wobei der längliche Hohlkörper (24) eine Hohlkörpermittelachse (74) aufweist; und
wobei die Hohlkörpermittelachse in der Rahmenebene liegt.

10. Fahrradrahmen nach einem der Ansprüche 2 bis 9, bei dem der längliche Hohlkörper (24) zur Rohrachse (14) des Oberröhrs (4) in einem Winkel α zwischen 10° und 80° angeordnet ist.

11. Fahrradrahmen nach einem der Ansprüche 1 bis 10, bei dem der Fahrradrahmen ferner ein Tretlager aufweist;
wobei die zweite Öffnung (12) näher an dem Tretlager angeordnet ist als die erste Öffnung (10); und
wobei die erste Öffnung (10) näher an dem Sitzrohr (6) angeordnet ist als die zweite Öffnung (12).

12. Fahrrad mit einem gefederten Fahrradrahmen (2), der ein Oberrohr (8), ein Sitzrohr (4), ein Tretlager (7) und einen gefederten Hinterbau (79) aufweist, welcher im Bereich des Tretlagers um einen unteren Drehpunkt (5) schwenkbar gehalten ist und welcher im oberen Bereich mit einem gedämpften Hinterbausystem (81) verbunden ist, das derart an dem Oberrohr und/oder dem Sitzrohr gehalten ist, dass eine Schwenkbewegung des Hinterbaus um den unteren Drehpunkt möglich ist; und
wobei der Fahrradrahmen als Fahrradrahmen mit einem Durchführungssystem (1) nach einem der Ansprüche 1 bis 11 vorgesehen ist, dessen Übertragungselemente-Durchführung (3) im Oberrohr und/oder Sitzrohr angeordnet ist.

13. Fahrrad nach Anspruch 12, bei dem das gedämpfte Hinterbausystem (81) eine gedämpfte Wippe (80) mit zwei Umlenkhebeln (82) aufweist, die an dem Oberrohr jeweils seitlich um eine gemeinsame Drehachse schwenkbar gehalten sind und mittels der der Hinterbau an dem Oberrohr gehalten ist;
wobei die Übertragungselemente-Durchführung (3) im Bereich zwischen den Umlenkhebeln (82) angeordnet ist.

14. Fahrrad nach Anspruch 12 oder 13, wobei das Übertragungselement (70) eine Hydraulikleitung einer Sattelarretierungsvorrichtung ist.

## Claims

1. A bicycle frame with a lead-through system (1) for transfer elements of bicycle components:
wherein the bicycle frame (2) has a tubular structure of frame tubes (4, 6) ; and
wherein are provided:
- a transfer element lead through (3); and
- at least one transfer element (70) for purposes of controlling a bicycle component, from the group of gearshift cable, brake cable, hydraulic line or pneumatic line;
wherein at least one frame tube (4) has a first opening (10) and a second opening (12) in its cylinder lateral surface (8); wherein the at least one frame tube (4) has a tube axis (14) and the first opening (10) lies essentially opposite to the second opening (12) with respect to the tube axis (14); and wherein the first opening (10) has a first edge region (16) and the second opening (12) has a second edge region (18);
wherein a statically effective reinforcement (20, 22, 36, 38, 40) of the first (16) and/or second edge region (18) is provided;
wherein a lead-through opening (5) of the transfer element lead-through is formed between the first and the second opening; and
wherein the at least one transfer element (70) is arranged such that it is guided through the lead-through opening (5);
wherein the first (10) and the second openings (12) are arranged in zones of the at least one frame tube (4) that are subjected to tension and compression; and
wherein the at least one frame tube, in which the transfer element lead-through is designed, is a top tube (4), which is connected at one end with a seating tube (6).

2. The bicycle frame according to Claim 1, wherein an elongated hollow body (24) is provided with a first end (26) with a first front face (30) and with a second end (28) with a second front face (32);
wherein the first (30) and the second front faces (32) each have an opening (34); and
wherein the elongated hollow body (24) connects the first opening (10) with the second opening (12) and forms the transfer element lead-through.

3. The bicycle frame according to Claim 2, wherein the elongated hollow body (24) effectively statically reinforces the first (16) and/or the second edge region (18).

4. The bicycle frame according to Claim 2 or 3, wherein the elongated hollow body (24) is connected with the frame tube (4) in a material bond.

5. The bicycle frame according to one of the Claims 2 to 4, wherein the elongated hollow body (24) is inserted into the first opening (10) and/or the second opening (12).

6. The bicycle frame according to one of the Claims 2 to 5, wherein the first (26) and/or the second ends (28) of the elongated hollow body (24) have, at least in part, a projection (38, 40) pointing laterally outwards.

7. The bicycle frame according to one of the Claims 2 to 6, wherein the elongated hollow body (24) has at least a first section (44) and a second section (46);
wherein the first section (44) and the second section (46) are connected together.

8. The bicycle frame according to Claim 7, wherein the first section (44), on a first edge (54) opposite to the first front face (30), and the second section (46), on a second edge (56) opposite to the second front face (32), each have centring means (58) matching with one another such that an inner wall (42) of the first section (44) is aligned with an inner wall (42) of the second section (46).

9. The bicycle frame according to one of the Claims 2 to 8, wherein the seating tube (6) has a seating tube central axis (76) and the top tube has a top tube central axis, which together span a frame plane;
wherein the elongated hollow body (24) has a hollow body central axis (74); and
wherein the hollow body central axis lies in the frame plane.

10. The bicycle frame according to one of the Claims 2 to 9, wherein the elongated hollow body (24) is arranged at an angle α between 10° and 80° to the tube axis (14) of the top tube (4).

11. The bicycle frame according to one of the Claims 1 to 10, wherein the bicycle frame furthermore has a bottom bracket;
wherein the second opening (12) is arranged nearer to the bottom bracket than the first opening (10); and
wherein the first opening (10) is arranged nearer to the seating tube (6) than the second opening (12).

12. A bicycle with a suspended bicycle frame (2), which has a top tube (8), a seating tube (4), a bottom bracket (7) and a suspended rear structure (79), which in the region of the bottom bracket is held such that it can pivot about a lower point of rotation (5), and which in the upper region is connected with a damped rear structure system (81), which is held on the top tube and/or on the seating tube such that a pivotal movement of the rear structure about the lower point of rotation is possible; and
wherein the bicycle frame is provided as a bicycle frame with a lead-through system (1) according to one of the Claims 1 to 11, the transfer element lead-through (3) of which is arranged in the top tube and/or seating tube.

13. The bicycle according to Claim 12, wherein the damped rear structure system (81) has a damped rocker (80) with two deflection levers (82), which are each held on the top tube laterally such that they can pivot about a common axis of rotation, and by which the rear structure is held on the top tube;
wherein the transfer element lead-through (3) is arranged in the region between the deflection levers (82).

14. The bicycle according to Claim 12 or 13, wherein the transfer element (70) is a hydraulic line of a saddle-locking device.

## Revendications

1. Cadre de bicyclette avec un système de passage (1) pour des éléments de transmission de composants de bicyclette :
dans lequel le cadre de bicyclette (2) comporte une structure en tubes, constituée de tubes de cadre (4, 6) ; et
dans lequel il est prévu
- un passage à éléments de transmission (3) ; et
- au moins un élément de transmission (70) pour la commande d'un composant de bicyclette parmi le groupe incluant un câble, un frein, une conduite hydraulique ou une conduite pneumatique ;
dans lequel au moins un tube de cadre (4) comporte une première ouverture (10) et une deuxième ouverture (12) dans sa surface périphérique (8) ; dans lequel l'au moins un tube de cadre (4) comporte un axe de tube (14), et la première ouverture (10) se trouve essentiellement en face de la deuxième ouverture (12) par rapport à l'axe de tube (14) ; et dans lequel la première ouverture (10) comporte une première région de bord (16) et la deuxième ouverture (12) comporte une deuxième région de bord (18) ;
dans lequel est prévu un renforcement statique (20, 22, 36, 38, 40) de la première (16) et/ou de la deuxième région de bord (18) ;
dans lequel une ouverture de passage (5) du passage d'éléments de transmission est formée entre la première et la deuxième ouverture ; et
dans lequel l'au moins un élément de transmission (70) est agencé de manière à traverser l'ouverture de passage (5) ;
dans lequel la première (10) et la deuxième ouverture (12) sont agencées dans des zones de l'au moins un tube de cadre (4) qui subissent une pression et une traction ;
dans lequel l'au moins un tube de cadre est un tube supérieur (4), relié au tube d'assise (6) à une extrémité, et dans lequel est formé le passage d'éléments de transmission.

2. Cadre de bicyclette selon la revendication 1, dans lequel un corps creux allongé (24) avec une première extrémité (26) comportant une première surface frontale (30) et avec une deuxième extrémité (28) comportant une deuxième surface frontale (32) ;
dans lequel la première (30) et la deuxième surface frontale (32) comportent chacune une ouverture (34) ; et
dans lequel le corps creux allongé (24) relie entre elles la première ouverture (10) et la deuxième ouverture (12), et forme le passage d'éléments de transmission.

3. Cadre de bicyclette selon la revendication 2, dans lequel le corps creux allongé (24) renforce la première (16) et/ou la deuxième région de bord (18) dans leur statique.

4. Cadre de bicyclette selon la revendication 2 ou 3, dans lequel le corps creux allongé (24) est relié par liaison de matière au tube de cadre (4).

5. Cadre de bicyclette selon l'une des revendications 2 à 4, dans lequel le corps creux allongé (24) est inséré dans la première ouverture (10) et/ou dans la deuxième ouverture (12).

6. Cadre de bicyclette selon l'une des revendications 2 à 5, dans lequel la première (26) et/ou la deuxième extrémité (28) du corps creux allongé (24) comportent au moins partiellement une saillie (38, 40) orientée latéralement vers l'extérieur.

7. Cadre de bicyclette selon l'une des revendications 2 à 6, dans lequel le corps creux allongé (24) comporte au moins une première pièce (44) et une deuxième pièce (46) ;
dans lequel la première pièce (44) et la deuxième pièce (46) sont reliées entre elles.

8. Cadre de bicyclette selon la revendication 7, dans lequel la première pièce (44) et la deuxième pièce (46) comportent respectivement des moyens de centrage (58) correspondants, respectivement sur un premier bord (54) opposé à la première surface frontale (30), et sur un deuxième bord (56) opposé à la deuxième surface frontale (32), de sorte qu'une paroi intérieure (42) de la première pièce (44) se trouve en affleurement avec la paroi intérieure (42) de la deuxième pièce (46).

9. Cadre de bicyclette selon l'une des revendications 2 à 8, dans lequel le tube d'assise (6) comporte un axe médian de tube d'assise (76) et le tube supérieur comporte un axe médian de tube supérieur, qui ensemble déploient un plan de cadre ;
dans lequel le corps creux allongé (24) comporte un axe médian de corps creux allongé (74) ; et
dans lequel l'axe médian de corps creux allongé se trouve dans le plan du cadre.

10. Cadre de bicyclette selon l'une des revendications 2 à 9, dans lequel le corps creux allongé (24) est agencé de manière à former un angle α compris entre 10° et 80° par rapport à l'axe de tube (14) du tube supérieur (4).

11. Cadre de bicyclette selon l'une des revendications 1 à 10, dans lequel le cadre de bicyclette comporte en outre un pédalier ;
dans lequel la deuxième ouverture (12) est prévue plus près du pédalier que la première ouverture (10) ; et
dans lequel la première ouverture (10) est prévue plus près du tube d'assise (6) que la deuxième ouverture (12).

12. Bicyclette avec un cadre de bicyclette sur ressorts (2), comportant un tube supérieur (8), un tube d'assise (4), un pédalier (7) et un train arrière sur ressorts (79) maintenu de façon à pouvoir pivoter, dans la région du pédalier, autour d'un point de rotation inférieur (5), tout en étant relié à un système de train arrière à amortisseur (81) dans la région supérieure, lequel est maintenu sur le tube supérieur et/ou le tube d'assise de manière à permettre un mouvement de pivotement du train arrière autour du point de rotation inférieur ; et
dans laquelle le cadre de bicyclette est conçu comme un cadre de bicyclette avec un système de passage (1) selon l'une des revendications 1 à 11, dont le passage d'éléments de transmission (3) est installé dans le tube supérieur et/ou le tube d'assise.

13. Bicyclette selon la revendication 12, dans laquelle le système de train arrière à amortisseur (81) comporte une bascule à amortisseur (80) avec deux leviers de déviation (82) maintenus de manière à pouvoir basculer latéralement sur le tube supérieur, autour d'un axe de rotation commun, tout en étant maintenus sur le tube supérieur au moyen du train arrière ;
dans laquelle le passage d'éléments de transmission (3) est prévu dans la région située entre les leviers de déviation (82).

14. Bicyclette selon la revendication 12 ou 13, dans laquelle l'élément de transmission (70) est une conduite hydraulique d'un dispositif de blocage de selle.
